# EUROPÄISCHE PATENTANMELDUNG

(11) **EP 2 559 926 A1**
(43) Veröffentlichungstag der Anmeldung: **20.02.2013**
(21) Anmeldenummer: 11178080.5
(22) Anmeldetag: 19.08.2011
(51) Int. Cl.: F16K 17/04

(54) **Sicherheitsventil**

(30) Priorität: 15.08.2011 DE 202011050989 U
(71) Anmelder: Goetze KG Armaturen, 71636 Ludwigsburg (DE)
(72) Erfinder: Wolpert, Gerhard, 72770 Reutlingen (DE)
(74) Vertreter: Fleck, Hermann-Josef

(57) **Zusammenfassung**

Die Erfindung bezieht sich auf ein Sicherheitsventil mit einer in einer Längsrichtung erstreckten Ventilhaube (2) und einem daran mit einem hinteren Abschnitt (10) angeschlossenen Ventilgehäuse (1), das einen eine Einströmöffnung (20) umgebenden vorderen Abschnitt (11) und eine in dem hinteren Abschnitt (10) ausgebildete Ausströmöffnung (30) aufweist, wobei zwischen der Einströmöffnung (20) und der Ausströmöffnung (30) ein Ventilsitz (3) und ein darauf mittels Federkraft angedrückter Ventilkegel (4) angeordnet sind und in der Ventilhaube (2) ein sich in deren Längsrichtung erstreckender, mit dem Ventilkegel (4) verbundener Ventilstößel (5) geführt und eine die Federkraft bewirkende Feder (6) abgestützt ist. Eine einfache, stabile Montage wird dadurch erreicht, dass der vordere Abschnitt (11) des Ventilgehäuses (1) mit einem die Einströmöffnung (20) umgebenden Ringflansch (110) versehen ist, der eine Anlagefläche mit einer rechtwinklig zur Längsrichtung des Sicherheitsventils liegenden Flächennormalen bildet (Fig. 1).

## Beschreibung

Die Erfindung bezieht sich auf ein Sicherheitsventil mit einer in einer Längsrichtung erstreckten Ventilhaube und einem daran mit einem hinteren Abschnitt angeschlossenen Ventilgehäuse, das eine in seinem vorderen Abschnitt ausgebildete Einströmöffnung und eine in dem hinteren Abschnitt ausgebildete Ausströmöffnung aufweist, wobei in einem Strömungskanal zwischen der Einströmöffnung und der Ausströmöffnung in einem in Längsrichtung verlaufenden inneren Strömungskanalabschnitt ein Ventilsitz und ein darauf mittels Federkraft angedrückter Ventilkegel angeordnet sind und in der Ventilhaube ein sich in deren Längsrichtung erstreckender, mit dem Ventilkegel verbundener Ventilstößel geführt und eine die Federkraft bewirkende Feder abgestützt ist.

Ein Sicherheitsventil dieser Art ist in der EP 1 852 642 B1 angegeben. Das Sicherheitsventil ist aus einem Ventilgehäuse und einer darauf angebrachten und sich in einer Längsrichtung erstreckenden zylinderförmigen Ventilhaube zusammengesetzt, wobei sich eine Einströmöffnung koaxial zu der Ventilhaube erstreckt und ein Bereich um einen Ventilkegel und einen Ventilsitz von einem mit Austrittsöffnungen versehenen Abschnitt der Ventilhaube umgeben ist. Der einströmseitige vordere Abschnitt des Ventilgehäuses weist ein Außengewinde auf, mit dem das Sicherheitsventil an einem angepassten Gewinde eines Behälters oder einer Leitung anschließbar ist. Die Installationsmaßnahmen sind häufig mit nicht geringem Aufwand verbunden, wobei der Installationsraum eingeengt sein kann.

Der Erfindung liegt die Aufgabe zugrunde, ein Sicherheitsventil der eingangs genannten Art bereit zu stellen, mit dem verbesserte Installationsmöglichkeiten geboten werden.

Diese Aufgabe wird mit den Merkmalen des Anspruches 1 gelöst. Hierbei ist vorgesehen, dass der Strömungskanal zwischen der Einströmöffnung und dem inneren Strömungskanalabschnitt um 90° gekrümmt ist und dass der vordere Abschnitt des Ventilgehäuses mit einem die Einströmöffnung umgebenden Ringflansch versehen ist, der auf seiner Außenseite eine Anlagefläche mit einer rechtwinklig zur Längsrichtung des Sicherheitsventils liegenden Flächennormalen bildet.

Mittels des so ausgebildeten Ventilgehäuses kann das Sicherheitsventil einfach über den Ringflansch mit der Anlagefläche und einer eingefügten Dichtung an einem entsprechenden Gegenflansch eines Behälters oder einer Leitung angeschlossen werden, wobei sich das Sicherheitsventil mit der Ventilhaube z.B. entlang einer den Druckraum umgebenden Behälterwandung erstreckt.

Ein eindeutiger Sitz und die Montagearbeiten werden dadurch begünstigt, dass von der Anlagefläche des Ringflansches ein die Einströmöffnung umgebender Anschlussstutzen vorsteht.

Zu einer einfachen, stabilen Montage tragen des Weiteren die Maßnahmen bei, dass in dem Ringflansch mehrere senkrecht durch die Anlagefläche verlaufende Befestigungslöcher eingebracht sind.

Für eine einfache Installation sind des Weiteren die Maßnahmen von Vorteil, dass die Ausströmöffnung von einem senkrecht zur Längsrichtung am hinteren Abschnitt abstehenden Ausströmstutzen umgeben ist. Hierbei ist es günstig, wenn in Umfangsrichtung des Ventils die Einsfrömöffnung mit dem Ringflansch und die Ausströmöffnung mit dem Ausströmstutzen um 90° zueinander versetzt angeordnet sind.

Für den Aufbau und mögliche Reparaturmaßnahmen sind des Weiteren die Maßnahmen von Vorteil, dass der Ventilsitz als separates Teil von einer zur Ventilhaube liegenden hinteren Öffnung des Ventilgehäuses her eingesetzt und auf einem ringförmigen Absatz in dem Ventilgehäuse gelagert und in dem Strömungskanal festgelegt ist.

Ein kompakter Aufbau, der die Montage auch in engen Einbauräumen begünstigt, sowie eine stabile Ausbildung auch im Bereich des Ringflansches werden dadurch erreicht, dass die Ventilhaube, der hintere Gehäuseabschnitt und der innere Strömungskanalabschnitt koaxial zueinander angeordnet sind, dass der vordere Gehäuseabschnitt über einen umlaufenden verdickten Wandabschnitt in den hinteren Gehäuseabschnitt übergeht und dass der Ringflansch einstückig in einen Abschnitt des umlaufenden verdickten Wandabschnitts übergeht und gegenüber dessen Außenseite um einen Absatz in Richtung der Flächennormale der Anlagefläche vorsteht.

Zu einer einfachen Montage tragen ferner die Maßnahmen bei, dass sich die Befestigungslöcher durchgehend auf der von der Anlagefläche abgewandten Seite des Ringflansches in darauf angeformten Führungshülsen fortsetzen.

Die Stabilität und ein kompakter Aufbau werden auch dadurch unterstützt, dass zwei Führungshülsen seitlich in zwei Außenbereichen des umlaufenden verdickten Wandabschnitts zumindest zum Teil eingeformt sind.

Vorteilhaft für die Montage und eine stabile Anbringung sind auch die Maßnahmen, dass der Außendurchmesser des kreisringförmigen Ringflansches größer ist als der Außendurchmesser des in Längsrichtung orientierten Gehäuseabschnitts einschließlich des hinteren Gehäuseabschnitts.

Fertigungstechnische und installationstechnische Vorteile bei stabiler Ausbildung des Ventilgehäuses werden ferner dadurch erreicht, dass ein Übergangsbereich zwischen der von der Anlagefläche abgekehrten Seite des Ringflansches und der anschließenden Wandung des Ventilgehäuses in Längsrichtung des Sicherheitsventils U-förmig geformt ist, wobei die Außenkontur zwischen den U-Schenkeln einen Abstand besitzt, der dem Außendurchmesser des in Längsrichtung orientierten Gehäuseabschnitts entspricht. Auch werden durch diesen Aufbau vorteilhafte Übergänge im Anbindungsbereich des Ringflansches erreicht und ungünstige äußere Hohlräume und nachteilige Ablagerungen von Schmutzstoffen weitgehend vermieden.

Eine vorteilhafte Ausgestaltung besteht dabei darin, dass der U-Bogen halbkreisförmig gekrümmt ist.

Zu einer stabilen Ausbildung tragen auch die Maßnahmen bei, dass zumindest ein Teil der Führungshülsen über Stege mit der benachbarten Wandung des Führungskanals einstückig verbunden ist.

Die Fertigung und ein stabiler Aufbau werden auch dadurch begünstigt, dass der ringförmige Absatz für den Ventilsitz in dem umlaufenden verdickten Wandabschnitt ausgebildet ist.

Für die Montage und Funktion bestehen weitere vorteilhafte Ausgestaltungsmerkmale darin, dass der Ausströmstutzen den gleichen Außendurchmesser besitzt wie der hintere Gehäuseabschnitt und in Umfangsrichtung mit seiner Achse gegenüber der Flächennormale der Anlagefläche um 90° versetzt ist.

Die Erfindung wird nachfolgend anhand der Zeichnungen näher erläutert. Es zeigen:
- Fig. 1: eine perspektivische Ansicht eines Sicherheitsventils mit Ventilgehäuse und Ventilhaube,
- Fig. 2: das Sicherheitsventil nach Fig. 1 in einer seitlichen Ansicht,
- Fig. 3: eine andere perspektivische Ansicht des Sicherheitsventils nach Fig. 1,
- Fig. 4: ein Sicherheitsventil in einem Längsschnitt,
- Fig. 5: eine andere Seitenansicht des Sicherheitsventils nach Fig. 1,
- Fig. 6: eine weitere perspektivische Darstellung des Sicherheitsventils nach Fig. 1,
- Fig. 7A bis 7E: das Sicherheitsventil nach Fig. 1 in Draufsicht, zwei seitlichen Ansichten, von der Vorderseite und von der Rückseite,
- Fig. 8A bis 8E: das Ventilgehäuse in einer perspektivischen Ansicht schräg von vorn oben, in einer Seitenansicht, in Draufsicht, in einem Längsschnitt entlang einer Schnittebene A-A und in einem Querschnitt entlang einer Schnittebene B-B,
- Fig. 9A bis 9H: das Ventilgehäuse in einer Seitenansicht, einem Längsschnitt, einem Querschnitt entlang einer Schnittebene D-D, einem weiteren Längsschnitt entlang einer Schnittebene A-A, ein Detail X, ein Detail Y und ein Detail Z.

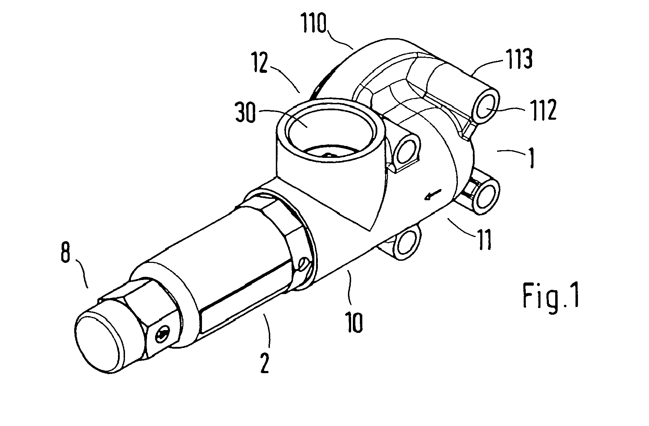

Ein in Fig. 1 gezeigtes Sicherheitsventil weist ein Ventilgehäuse 1 auf, an dem eine längserstreckte Ventilhaube 2 angeschlossen, z. B. angeschraubt ist, die in ihrem mittleren Abschnitt eine zylindrische Form besitzt und in ihrem von dem Ventilgehäuse abgelegenen Endabschnitt verjüngt und mit einer abschließende Kappe 8 sowie einem Schraubansatz versehen ist. Das Ventilgehäuse 1 erstreckt sich mit einem an die Ventilhaube 2 anschließenden hinteren Abschnitt koaxial zu der Ventilhaube 2 und ist in seinem einströmseitigen vorderen Abschnitt 11 um 90° gekrümmt und mit einem einströmseitigen Ringflansch 110 versehen, wie auch die Fig. 23, 4, 5 und 6 und weitere Figuren zeigen. An dem hinteren, abströmseitigen Abschnitt 110 des Ventilgehäuses 1 ist seitlich rechtwinklig zu der Längsrichtung des Sicherheitsventils ein eine Ausströmöffnung 30 umgebender Ausströmstutzen 12 angeformt.

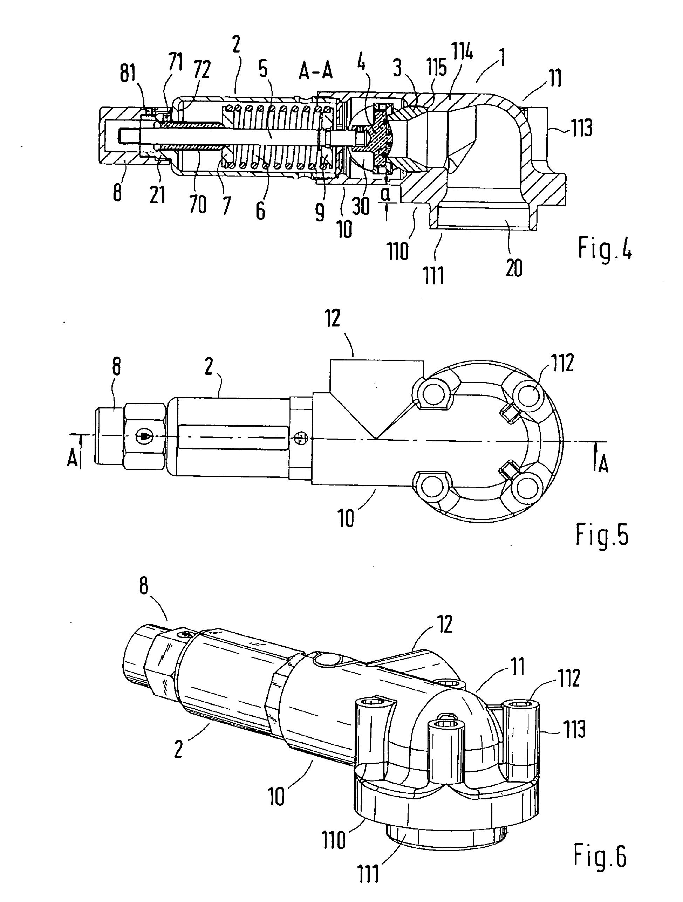

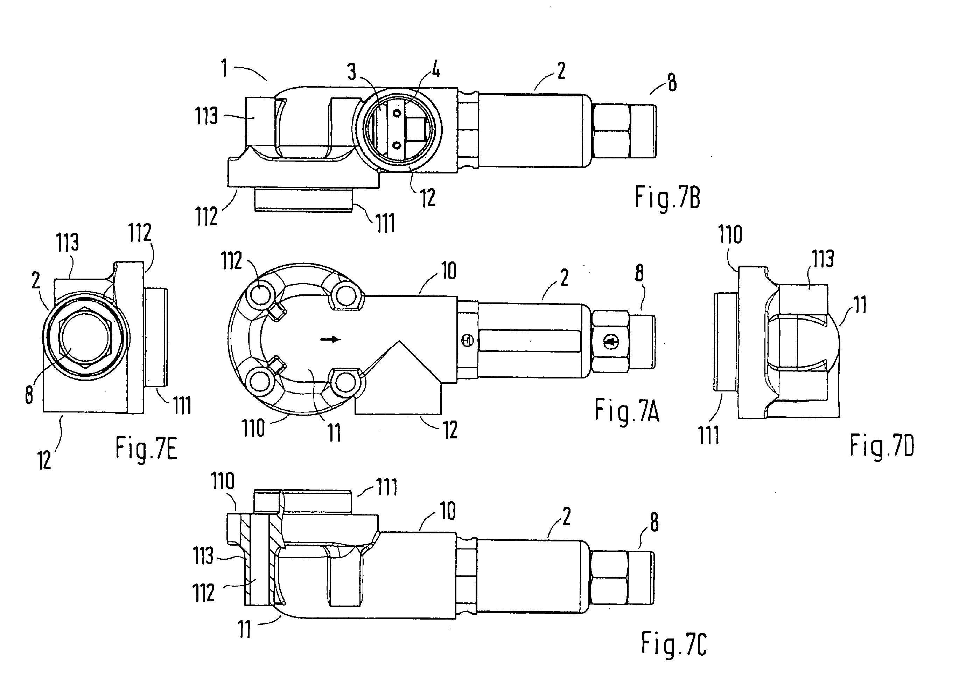

Wie aus Fig. 4 ersichtlich, ist von einer Einströmöffnung 20 im vorderen Abschnitt des Ventilgehäuses 10 ausgehend im Inneren des Ventilgehäuses 1 ein Strömungskanal mit um 90° abgebogener Strömungsrichtung gebildet, wobei in dem in Längsrichtung des Sicherheitsventils gerichteten inneren Strömungskanalabschnitt ein Ventilsitz 3 eingesetzt ist, auf dem ein Ventilkegel 4 mittels Federkraft dichtend entlang einem ringförmigen Dichtbereich angedrückt ist. In axialer Richtung in Höhe des Dichtbereichs ist die von dem Ausströmstutzen 12 umgebene Ausströmöffnung 30 angeordnet, wie aus Fig. 7B ersichtlich. Der Ventilkegel 4 wird mittels einer in der Ventilhaube 2 angeordneten Feder 6 mit einer einstellbaren Andruckkraft beaufschlagt, wobei die Feder 6 mit ihrem hinteren Ende an einem von dem Ventilgehäuse 1 abliegenden oberen Federteller 7 und an ihrer dem Ventilgehäuse 1 zugekehrten vorderen Stirnseite auf einem unteren Federteller 9 gelagert ist. Zum Variieren der Federkraft ist in einem hinteren verjüngten Endabschnitt 21 der Ventilhaube 2 ein Stellglied 70 z. B. mittels eines Gewindes verstellbar gelagert und mittels einer Sicherungsschraube 71 in einer Einstellposition fixierbar, wobei die Feder 6 zwischen dem oberen und unteren Federteller 7, 9 mehr oder weniger stark vorgespannt ist. Der Ventilkegel 4 ist mit einem die Ventilhaube 2 koaxial durchsetzenden Ventilstößel 5 verbunden, der durch das Stellglied 70 geführt ist, an seinem hinteren Ende den hinteren verjüngten Endabschnitt 21 der Ventilhaube 2 überragt und von der auf dem verjüngten Endabschnitt 21 aufgesetzten Kappe 8 nach außen hin abgedeckt ist. Die Kappe ist mittels einer weiteren, seitlich eingebrachten Sicherungsschraube 81 bzw. Plombe gesichert. Das über die Einströmöffnung 20 anliegende Druckmedium kann den Ventilkegel 4 gegen die Andruckkraft der Feder 6 erst dann abheben und über die Ausströmöffnung 30 entweichen, wenn sein Druck die mittels der Feder 6 vorgegebene Andruckkraft überschreitet.

Der Ringflansch 110 wird mit einer umlaufenden Anlagefläche, deren Flächennormale senkrecht zur Längsrichtung des Sicherheitsventils mit der Ventilhaube 2 gerichtet ist, an einer entsprechend ausgebildeten komplementären Anlagefläche an der Wandung eines Druckbehälters bzw. einem daran angeschlossenen Leitungsabschnitt unter Zwischenfügung einer Dichtung angeflanscht. Am zentralseitigen umlaufenden Rand des Ringflansches 110 steht von der Anlagefläche ein Anschlussstutzen 111 vor, der in eine zu dem Druckraum führende Anschlussöffnung eingesetzt wird, so dass eine einfache, eindeutige und stabile Positionierung bei der Montage erreicht wird. Der Ringflansch 110 ist senkrecht zu der Anlagefläche in Umfangsrichtung verteilt mit Befestigungslöchern 112 versehen, die sich durch hülsenartige Führungen 113 erstrecken (vgl. Fig. 7C), welche auf der von der Anlagefläche abgewandten Seite des Ringflansches 110 an dem vorderen Abschnitt 11 des Ventilgehäuses 1 angeformt sind. In der komplementären Anlagefläche im Anschlussbereich des Druckraums sind entsprechend angepasste Gewindebohrungen eingebracht, so dass eine einfache, stabile Montage mittels Befestigungsschrauben erreicht wird. Das Sicherheitsventil kann einfach auf engem Raum angeschlossen und installiert werden, wobei es sich in seiner Längsrichtung z. B. in geringem Abstand entlang einer Behälterwand des Druckraums erstreckt.

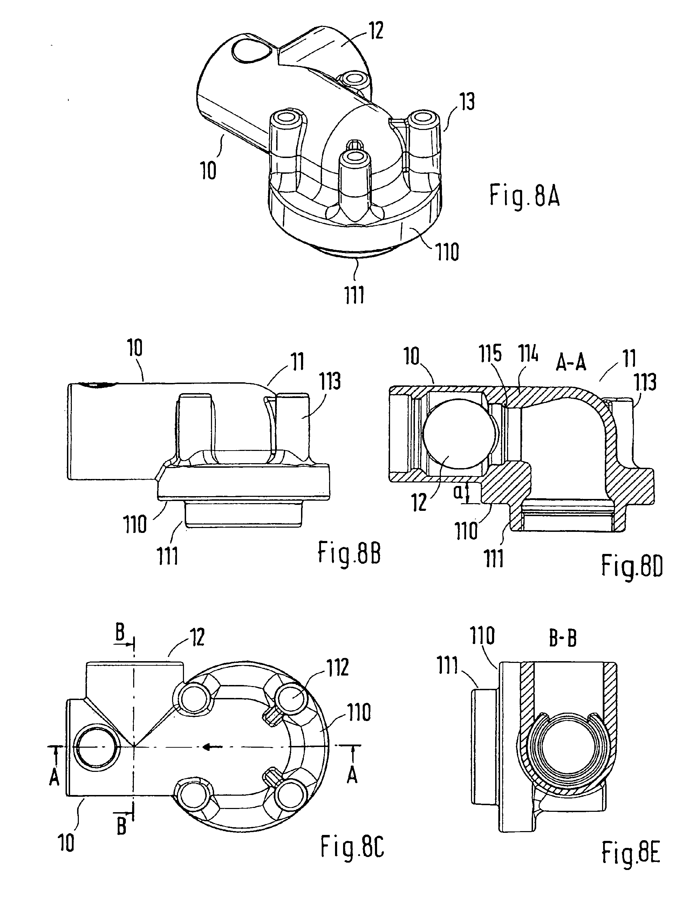

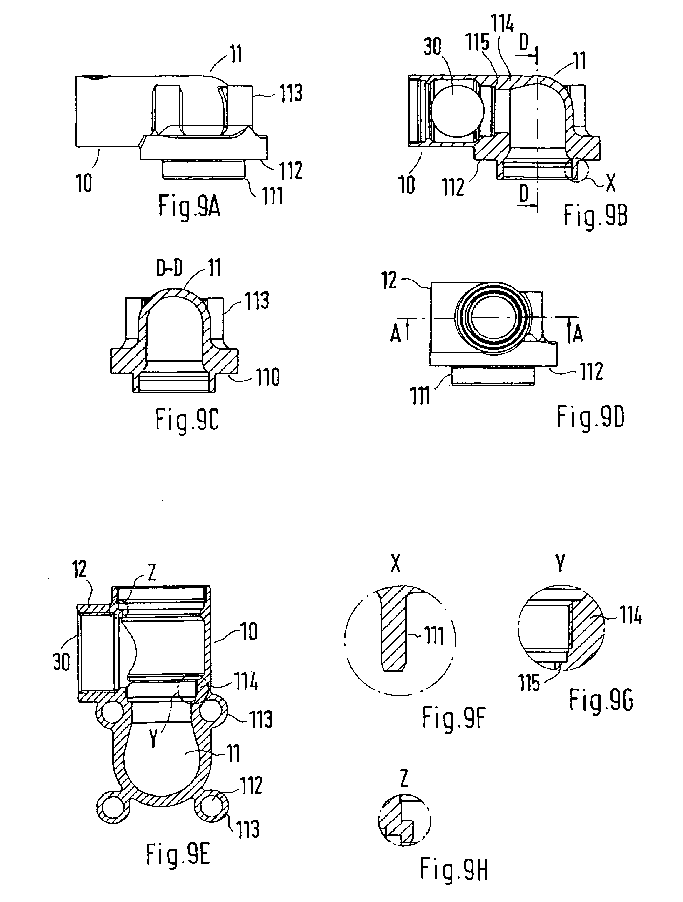

Wie aus den Fig. 4 und 6 sowie auch weiteren Fig. (vgl. z. B. Fig. 8D und 9B) ersichtlich, ist im Übergangsbereich zwischen dem vorderen und hinteren Gehäuseabschnitt 11, 10 des Ventilgehäuses 1 ein umlaufender verdickter Wandabschnitt 114 ausgebildet, in dessen konzentrisch zur Längsachse des Ventilgehäuses 1 und der Ventilhaube 2 umlaufender Innenkontur ein ringförmiger Absatz 115 ausgebildet ist, auf dem der Ventilsitz 3 gelagert ist. Ferner ist in einem äußeren Umfangsbereich des umlaufenden verdickten Wandabschnittes 114 ein Abschnitt des Ringflansches 110 angeformt, der mit einem Absatz a über den benachbarten Bereich des kreisförmigen Außenumfangs des Ventilgehäuses 1 vorsteht. Damit ist die Anlagefläche des Ringflansches 110 in Richtung ihrer Flächennormalen um den Abstand a von dem Außenumfang des in Längsrichtung verlaufenden Abschnitts des Ventilgehäuses 1 entfernt, wobei durch den Abstand a auch der Abstand von einer benachbarten Wandung des abzusichernden Druckraums gegeben ist und eine Montage auch in engen Einbauräumen bei stabiler Ausführung des Ventilgehäuses 1 insbesondere auch im Anbindungsbereich des Ringflansches und eine stabile Befestigung an einem komplementären Ringflansch an der Wandung des Druckraums oder einem mit diesem verbundenen Leitungsabschnitt erreicht werden. Der Abstand a ist z. B. geringer als die Hälfte oder ein Viertel des Durchmessers des hinteren Gehäuseabschnitts 10. Im Übrigen ist der um die Einströmöffnung 20 umlaufende Ringflansch 110 an den den gekrümmten Abschnitt des Strömungskanals umgebenden Wandbereich des Ventilgehäuses 1 einstückig angeformt, wobei der Außendurchmesser des kreisförmigen Ringflansches größer ist als der Außendurchmesser des in Längsrichtung orientierten Gehäuseabschnitts einschließlich des hinteren Gehäuseabschnitts 10. Ein Übergangsbereich zwischen der von der Anlagefläche abgekehrten Seite des Ringflansches 110 und der anschließenden Wandung des Ventilgehäuses 1 in Längsrichtung des Sicherheitsventils ist U-förmig geformt, wobei die Außenkontur zwischen den U-Schenkeln einen Abstand besitzt, der dem Außendurchmesser des in Längsrichtung orientierten Gehäuseabschnitts entspricht. Damit ergibt sich umlaufend auf der von der Anlagefläche abgewandten Seite des Ringflansches 110 ein verdickter Übergangsbereich in den den gekrümmten Abschnitt umgebenden Wandbereich des Ventilgehäuses 1 mit einer stabilen Anbindung, wobei der Übergangsbereich zu der flach, parallel zur Anlagefläche ausgebildeten Oberseite des Ringflansches als gekrümmte hohle Kehle geformt ist. Mit diesem Aufbau ergeben sich neben herstellungstechnischen Vorteilen beim Formen auch glatte Oberflächen mit möglichst wenig Hohlräumen, die ein Festsetzen gegebenenfalls korrosiver Schmutzpartikel verhindern helfen.

Die auf der von der Anlagefläche abgekehrten Seite des Ringflansches angebrachten hülsenartigen Führungen bzw. Führungshülsen 113 erstrecken sich bis über eine zur Anlagefläche parallele Mittellängsebene des Ventilgehäuses 1, jedoch nicht ganz bis zu der von der Anlagefläche abgekehrten Oberseite des Ventilgehäuses 1. Zwei Führungshülsen 113 sind dabei teilweise in den umlaufenden verdickten Wandabschnitt 114 hineinragend seitlich an dem in Längsrichtung erstreckten Teil des Ventilgehäuses 1 angeformt, während zwei weitere Führungshülsen 113 im vorderen Bereich des gekrümmten Abschnitts des Ventilgehäuses 1 angeformt und mit der den gekrümmten Abschnitt bildenden Wandung des Ventilgehäuses 1 über Stege einstückig verbunden. Diese Ausbildung trägt zur Stabilität des Ventilgehäuses 1 und zur Gestaltung als kompakte Einheit bei. Die Anbindung der Führungshülsen 113 an der Wandung des Ventilgehäuses 1 ist unter anderem in Fig. 9E deutlich zu erkennen. Hierbei ist ferner ersichtlich, dass eine Führungshülse 113 im Anschlussbereich des dem Krümmungsabschnitt des Ventilgehäuses 1 zugekehrten Wandbereichs des Ausströmstutzens 12 angeformt ist, wodurch ein stabiler, kompakter Aufbau des Ventilgehäuses 1 ebenfalls begünstigt wird. Der Ausströmstutzen 12 besitzt den gleichen Außendurchmesser wie der sich in Längsrichtung erstreckende Abschnitt mit dem hinteren Abschnitt 10 des Ventilgehäuses 1, wie auch die Fig. 6, 7A, 7B, 8A und 8C erkennen lassen.

Die Fig. 9F, 9G und 9H zeigen einen Ausschnitt im Übergangsbereich zwischen dem Anschlussstutzen 111 und der Anlagefläche des Ringflansches 110 (Detail X), einen Ausschnitt im Bereich des ringförmigen Absatzes 115 für den Ventilsitz 3 (Detail Y) und einen weiteren Absatz zur Abstützung einer Führungsscheibe für den Ventilstößel 5 unterhalb des unteren Federtellers 2 (Detail Z). Wie Fig. 4 zeigt, ist die Ventilhaube 2 mit ihrem dem Ventilgehäuse 1 zugekehrten vorderen bzw. unteren Abschnitt in einen entsprechend angepassten hinteren bzw. oberen Abschnitt des hinteren Gehäuseabschnitts 10 in das Ventilgehäuse 1 eingesetzt, beispielsweise mittels eines Außengewindes in ein Innengewinde eingeschraubt. Bei abgenommener Ventilhaube 2 wird der Ventilsitz 3, der als von dem Ventilgehäuse 1 separates Teil ausgeführt ist, in die hintere Öffnung des Ventilgehäuses in Längsrichtung desselben bis zu dem ringförmigen Absatz 115 eingeführt und an seiner dem umlaufenden verdickten Wandabschnitt 114 zugekehrten Außenumfang festgelegt, wobei ein nach hinten abstehender Abschnitt des Ventilsitzes 3 mit seinem stirnseitigen Ende den ringförmigen Dichtbereich bildet, der umfangsseitig von der Innenkontur des an den umlaufenden verdickten Wandabschnitt 114 in Längsrichtung anschließenden Abschnitt des Ventilgehäuses 1 beabstandet ist. Wie z. B. die Fig. 4 und 8D erkennen lassen, besitzt die nach hinten an den umlaufenden verdickten Wandabschnitt 114 anschließende Innenkontur des Ventilgehäuses 1 einen größeren Durchmesser als die Innenkontur des umlaufenden verdickten Wandabschnittes 114, während der Außendurchmesser des bis auf den Ringflansch 110, den Krümmungsabschnitt und den Ausströmstutzen 12 im Wesentlichen zylinderförmigen, in Längsrichtung verlaufenden Abschnitts des Ventilgehäuses 1 gleich bleibt.

Das Ventilgehäuse 1 wird vorzugsweise als Gussteil, beispielsweise aus Rotguss oder anderem metallischen Guss, hergestellt.

## Patentansprüche

1. Sicherheitsventil mit einer in einer Längsrichtung erstreckten Ventilhaube (2) und einem daran mit einem hinteren Abschnitt (10) angeschlossenen Ventilgehäuse (1), das eine in seinem vorderen Abschnitt (11) ausgebildete Einströmöffnung (20) und eine in dem hinteren Abschnitt (10) ausgebildete Ausströmöffnung (30) aufweist, wobei in einem Strömungskanal zwischen der Einströmöffnung (20) und der Ausströmöffnung (30) in einem in Längsrichtung verlaufenden inneren Strömungskanalabschnitt ein Ventilsitz (3) und ein darauf mittels Federkraft angedrückter Ventilkegel (4) angeordnet sind und in der Ventilhaube (2) ein sich in deren Längsrichtung erstreckender, mit dem Ventilkegel (4) verbundener Ventilstößel (5) geführt und eine die Federkraft bewirkende Feder (6) abgestützt ist,
**dadurch gekennzeichnet,**
**dass** der Strömungskanal zwischen der Einströmöffnung (20) und dem inneren Strömungskanalabschnitt um 90° gekrümmt ist und
**dass** der vordere Abschnitt (11) des Ventilgehäuses (1) mit einem die Einströmöffnung (20) umgebenden Ringflansch (110) versehen ist, der auf seiner Außenseite eine Anlagefläche mit einer rechtwinklig zur Längsrichtung des Sicherheitsventils liegenden Flächennormalen bildet.

2. Sicherheitsventil nach Anspruch 1,
**dadurch gekennzeichnet,**
**dass** von der Anlagefläche des Ringflansches (110) ein die Einströmöffnung (20) umgebender Anschlussstutzen (111) vorsteht.

3. Sicherheitsventil nach Anspruch 1 oder 2,
**dadurch gekennzeichnet,**
**dass** in dem Ringflansch (110) mehrere senkrecht durch die Anlagefläche verlaufende Befestigungslöcher (112) eingebracht sind.

4. Sicherheitsventil nach einem der vorhergehenden Ansprüche,
**dadurch gekennzeichnet,**
**dass** die Ausströmöffnung (30) von einem senkrecht zur Längsrichtung am hinteren Abschnitt (10) des Ventilgehäuses (1) abstehenden Ausströmstutzen (12) umgeben ist.

5. Sicherheitsventil nach einem der vorhergehenden Ansprüche,
**dadurch gekennzeichnet,**
**dass** der Ventilsitz (3) als separates Teil von einer zur Ventilhaube (2) liegenden hinteren Öffnung des Ventilgehäuses (1) her eingesetzt, auf einem ringförmigen Absatz (115) in dem Ventilgehäuse (2) gelagert und in dem Strömungskanal festgelegt ist.

6. Sicherheitsventil nach einem der vorhergehenden Ansprüche,
**dadurch gekennzeichnet,**
**dass** die Ventilhaube (2), der hintere Gehäuseabschnitt (10) und der innere Strömungskanalabschnitt koaxial zueinander angeordnet sind,
**dass** der vordere Gehäuseabschnitt (11) über einen umlaufenden verdickten Wandabschnitt (114) in den hinteren Gehäuseabschnitt (10) übergeht und dass der Ringflansch (110) einstückig in einen Abschnitt des umlaufenden verdickten Wandabschnitts (114) übergeht und gegenüber dessen Außenseite um einen Absatz (a) in Richtung der Flächennormale der Anlagefläche vorsteht.

7. Sicherheitsventil nach Anspruch 6,
**dadurch gekennzeichnet,**
**dass** sich die Befestigungslöcher (112) durchgehend auf der von der Anlagefläche abgewandten Seite des Ringflansches (110) in darauf angeformten Führungshülsen (113) fortsetzen.

8. Sicherheitsventil nach Anspruch 7,
**dadurch gekennzeichnet,**
**dass** zwei Führungshülsen (113) seitlich in zwei Außenbereichen des umlaufenden verdickten Wandabschnitts zumindest zum Teil eingeformt sind.

9. Sicherheitsventil nach einem der vorhergehenden Ansprüche,
**dadurch gekennzeichnet,**
**dass** der Außendurchmesser des kreisringförmigen Ringflansches (110) größer ist als der Außendurchmesser des in Längsrichtung orientierten Gehäuseabschnitts einschließlich des hinteren Gehäuseabschnitts (10).

10. Sicherheitsventil nach einem der vorhergehenden Ansprüche,
**dadurch gekennzeichnet,**
**dass** ein Übergangsbereich zwischen der von der Anlagefläche abgekehrten Seite des Ringflansches (110) und der anschließenden Wandung des Ventilgehäuses (1) in Längsrichtung des Sicherheitsventils U-förmig geformt ist, wobei die Außenkontur zwischen den U-Schenkeln einen Abstand besitzt, der dem Außendurchmesser des in Längsrichtung orientierten Gehäuseabschnitts entspricht.

11. Sicherheitsventil nach Anspruch 10,
**dadurch gekennzeichnet,**
**dass** der U-Bogen halbkreisförmig gekrümmt ist.

12. Sicherheitsventil nach einem der Ansprüche 7 bis 11,
**dadurch gekennzeichnet,**
**dass** zumindest ein Teil der Führungshülsen (113) über Stege mit der benachbarten Wandung des Führungskanals einstückig verbunden ist.

13. Sicherheitsventil nach einem der Ansprüche 5 bis 12,
**dadurch gekennzeichnet,**
**dass** der ringförmige Absatz (115) für den Ventilsitz (3) in dem umlaufenden verdickten Wandabschnitt (114) ausgebildet ist.

14. Sicherheitsventil nach einem der Ansprüche 4 bis 13,
**dadurch gekennzeichnet,**
**dass** der Ausströmstutzen (12) den gleichen Außendurchmesser besitzt wie der hintere Gehäuseabschnitt (10) und in Umfangsrichtung mit seiner Achse gegenüber der Flächennormale der Anlagefläche um 90° versetzt ist.
